# EUROPÄISCHE PATENTSCHRIFT

(11) **EP 1 175 316 B1**
(45) Veröffentlichungstag und Bekanntmachung des Hinweises auf die Patenterteilung: **15.09.2004**
(21) Anmeldenummer: 01913725.6
(22) Anmeldetag: 28.02.2001
(51) Int. Cl.: B60R 21/045

(54) **SICHERHEITSEINRICHTUNG FÜR EIN FAHRZEUG MIT EINER LENKUNG UND SICHERHEITSVERFAHREN**
SAFETY DEVICE FOR A VEHICLE WITH A STEERING SYSTEM AND CORRESPONDING SAFETY METHOD
DISPOSITIF DE SECURITE POUR VEHICULE A SYSTEME DE DIRECTION ET PROCEDE DE SECURITE

(30) Priorität: 29.02.2000 DE 20003708 U
(43) Veröffentlichungstag der Anmeldung: 30.01.2002
(73) Patentinhaber: ThyssenKrupp Presta AG, 9492 Eschen (LI)
(72) Erfinder: MÜLLER, Olaf, 65428 Rüsselsheim (DE)
(74) Vertreter: Lindner, Manfred Klaus, Dipl.-Phys.
(86) Internationale Anmeldenummer: PCT/DE2001/000737
(87) Internationale Veröffentlichungsnummer: WO 2001/064483

(56) Entgegenhaltungen:
- DE-C- 19 730 397
- US-A- 5 131 681
- US-A- 5 409 260

## Beschreibung

Die Erfindung betrifft allgemein eine Sicherheitseinrichtung für ein Fahrzeug mit einer Lenkung gemäß dem Oberbegriff des Anspruchs 1 sowie ein Sicherheitsverfahren nach dem Oberbegriff des Anspruches 14.

In der Praxis sind im Eintauchbereich von Oberschenkeln eines Fahrers in der unteren Armaturentafel beim Kraftfahrzeug Lastabsorptionselemente untergebracht, die sich bei einem Unfall oder Crash über eine Wegstrecke verformen und dabei unter Energieabsorption Lastspitzen abbauen. Zu demselben Zweck sind auch Airbags in diesem Bereich aus der Praxis bekannt geworden.

Damit wird jedoch noch kein besonders guter Schutz für den Fahrer bei einem Unfall erreicht.

Aus dem Dokument US 5 409 260 A ist eine Sicherheitseinrichtung nach dem Oberbegriff des Anspruchs 1 bekannt.

Die Erfindung hat daher zum Ziel, eine solche Sicherheitseinrichtung für ein Fahrzeug mit einer Lenkung zu schaffen, um damit den Beinbereich und insbesondere den Oberschenkelbereich eines Fahrers bei einem Unfall weitergehend zu schützen.

Dieses Ziel wird mit einer Sicherheitseinrichtung nach dem Anspruch 1 sowie mit einem Sicherheitsverfahren nach dem Anspruch 14 erreicht.

Erfindungsgemäß wird somit eine Sicherheitseinrichtung für ein Fahrzeug mit einer Lenkung geschaffen, bezüglich der eine Lastabsorptionseinrichtung für einen Knieaufschlag eines Fahrers im Fall eines Unfalls angeordnet ist. Dabei ist weiterhin vorgesehen, dass die Lastabsorptionseinrichtung für einen Knieaufschlag ein Lastaufnahmeblech enthält, das im Fall eines Unfalls zu den Knien des Fahrers hin in eine oder in Richtung hin zu einer Wirkposition verstellbar ist.

Damit wird in einfacher und besonders wirksamer weise erreicht, dass die Knie des Fahrers abgefangen und damit dessen Beine geschützt werden.

Mit Vorzug ist dabei ferner vorgesehen, dass das Lastaufnahmeblech in seiner Wirkposition über wenigstens ein Lastabsorptionselement bezüglich der Lenkung abgestützt ist. Dadurch wird einerseits eine maximale Beinfreiheit für den Fahrer im Normalbetrieb des Fahrzeuges, d.h. ohne eine Unfallsituation, erreicht, und andererseits im Falle eines Unfalls ein optimaler Absorptionsweg für den Knieaufprall geschaffen.

Gemäß einer bevorzugten Ausgestaltung der Erfindung ist ein Lastabsorbtionselement durch einen Airbag gebildet. Zwar ist die Verwendung eines Airbags alleine in diesem Bereich bereits bekannt, wie eingangs schon angegeben ist, jedoch führt erst die Verwendung des Airbags zur Verstellung des Lastaufnahmebleches und als Lastabsorbtionselement in Kombination mit dem Lastaufnahmeblech zu einer guten Lösung zum Schutz der Beine des Fahrers. Der Airbag alleine ist geeignet, die Bewegung des Beins des Fahrers aufzufangen und abzudämpfen, jedoch wird nur der "Auftreffpunkt" oder "Eintauchpunkt" des Knies des Fahrers am Airbag genutzt. Die Kombination des Airbags mit dem Lastaufnahmeblech ermöglicht neben der einfachen Verstellung des letzteren eine bessere Nutzung der Dämpfungseigenschaft des Airbags unabhängig vom "Auftreffpunkt" des Knies des Fahrers und zudem die Verwendung eines kleineren Airbags, was zusätzlich zur Folge hat, dass der Airbag schneller aufgeblasen ist und zur Verfügung steht.

Insgesamt ist es im Rahmen der Erfindung bevorzugt, wenn das Lastaufnahmeblech mit dem Airbag im Fall eines Unfalls derart in Position zu den Knien des Fahrers hin verstellt wird, dass mehr Crashlastabsorptionsweg entsteht.

Eine weitere vorzugsweise und vorteilhafte Ausgestaltung der Erfindung sieht vor, dass der Airbag über eine Lastbegrenzung verfügt. Bevorzugt enthält die Lastbegrenzung ein Lastbegrenzungsventil, durch das belastungsabhängig Gas aus dem sich aufblasenden oder aufgeblasenen Airbag abgelassen wird.

Eine andere vorzugsweise Variante der Erfindung sieht vor, dass das Lastaufnahmeblech durch eine Schwenkhebeleinrichtung im Fall eines Unfalls zu den Knien des Fahrers hin in eine oder in Richtung hin zu einer Wirkposition verschwenkbar ist. Mit Vorzug enthält die Schwenkhebeleinrichtung zwei oder vier oder mehr Schwenkhebel.

In Kombination mit der vorstehenden Erfindungsvariante oder auf andere Weise realisiert ist es ferner bevorzugt, wenn wenigstens ein Lastabsorbtionselement zusammen mit dem Lastaufnahmeblech bezüglich der Lenkung im Fall eines Unfalls derart in Position zu den Knien des Fahrers hin in eine oder zu einer Wirkposition verschwenkbar ist, dass mehr Crashlastabsorptionsweg entsteht. Vorzugsweise ist eine Mehrzahl von Lastabsorbtionselementen vorgesehen und/oder verfügt jedes Lastabsorbtionselement über eine Lastbegrenzung, die insbesondere für jedes Lastabsorbtionselement durch eine Rücklaufsperre gebildet sein kann, die so ausgebildet ist, dass bei einer unfallbedingten Belastung durch die Knie ein lastaufnehmender Widerstand entsteht.

Vorzugsweise ist die Lastabsorptionseinrichtung für einen Knieaufschlag des Fahrers an der Lenkung angeordnet und ist das Lastaufnahmeblech in seiner zu den Knien des Fahrers hin verstellten Position ggf. über das wenigstens eine Lastabsorbtionselement an der Lenkung abgestützt.

Das erfindungsgemäße Sicherheitsverfahren für ein Fahrzeug mit einer Lenkung, bezüglich der eine Lastabsorptionseinrichtung für einen Knieaufschlag eines Fahrers im Fall eines Unfalls zu den Knien des Fahrers hin verstellt wird, ist derart ausgestaltet, dass bei einem Unfall ein Lastaufnahmeblech zu den Knien des Fahrers hin verstellt wird.

Vorzugsweise ist das verstellte Lastaufnahmeblech über wenigstens ein Lastabsorbtionselement bezüglich der Lenkung abgestützt.

Bei einer weiteren Variante des Verfahrens wird das Lastaufnahmeblech mittels eines sich aufblasenden Airbags oder einer Schwenkhebeleinrichtung verstellt.

Soweit in den vorliegenden Unterlagen von einem Lastaufnahmeblech gesprochen wird, ist dadurch keine Beschränkung dieses Bauteils auf ein metallisches Material verbunden. Diese plattenartige Lastaufnahme kann ohne weiteres auch aus anderen Materialien gefertigt sein, solange die Haltbarkeit für die gegebene Anwendung sichergestellt ist, was ein Fachmann ohne weiteres ermitteln oder festlegen kann.

Nachfolgend sind zwei bevorzugte Alternativen der Erfindung dargestellt.

Alternative 1: Mit dem Lastaufnahme- oder -verteilerblech verbundene Lastabsorptionselemente sind im Normalbetrieb des Fahrzeuges, also außerhalb einer Unfallsituation, platzsparend in dem unteren Armaturentafelkörper untergebracht. Das Lastaufnahmeblech ist an Schwenkhebeln aufgehängt und wird erst am Anfang eines Unfalls, der mit entsprechenden bekannten Sensoren detektierten Unfalls zusammen mit den Lastabsorbtionselementen mittels eines pyrotechnisch angetriebenen Zylinders in eine Position nahe der Knie des Fahrers gebracht. In einer Weiterbildung davon geben sich dort, d.h. wenn das Lastaufnahmeblech in einer Position nahe der Knie des Fahrers ist, verrastende Lastabsorptionselemente entsprechend einen langen Lastabbauweg vor, der auch für den Raum unter der Lenksäule gilt.

Alternative 2: Die Lastabsorption wird vergrößert und gleichmäßig verteilt durch bzw. aufeinen Airbag, an dem das Lastaufnahme- oder -verteilerblech angeordnet und im Fall eines Unfalls verstellt wird. Die Lastspitze wird durch den Druck im Airbag vorgegeben. Hierzu gibt es ein Druckregulierventil, das z.B. bei höherer Last der Oberschenkel mehr Gas abströmen läßt.

Die Erfindung wird anhand exemplarischer Ausführungsbeispiele nachfolgend unter Bezugnahme auf die Zeichnung näher erläutert, in der:
- Fig. 1: ein erstes Ausführungsbeispiel der Sicherheitseinrichtung gemäß der vorstehenden Alternative 1 zeigt, und
- Fig. 2: ein zweites Ausführungsbeispiel der Sicherheitseinrichtung gemäß der vorstehenden Alternative 2 zeigt.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

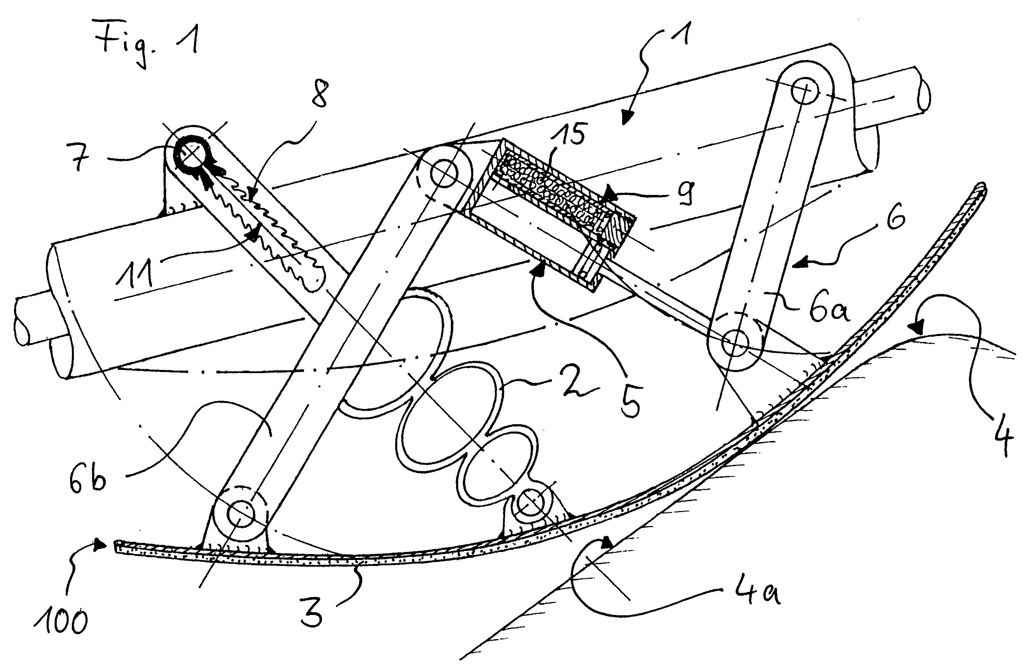

In der Fig. 1 ist ein erstes Ausführungsbeispiel einer Sicherheitseinrichtung 100 zur Verdeutlichung ihrer Komponenten in einer Seitenansicht gezeigt. An einer Lenksäule 1 und eventuell auch an einer nicht dargestellten Armaturentafel außen und rechts vom Knie 4 sind Lastabsorptionselemente 2 derart befestigt, dass diese im Normalzustand, d.h., wenn keine Unfallsituation vorliegt, platzsparend untergebracht sind. Die Lastabsorptionselemente 2 sind am anderen Ende mit einem Lastaufnahmeblech 3 verbunden, das als Formteil die untere Hälfte der Armaturentafel (nicht gezeigt) und die Lenksäule 1 abdeckt und gleichzeitig die auftreffende Last der Knie 4 bei einem Unfall aufnimmt und verteilt.

Im Falle eines Unfalls wird das Lastaufnahmeblech 3 mit einem pyrotechnischen Stellzylinder 5 mittels Schwenkhebeln 6a und 6b einer Schwenkhebeleinrichtung 6 herausgeschwenkt. Die Lastabsorptionselemente 2 schwenken mit heraus und verrasten in ihrer Lagerung 7 mit einer Rücklaufsperre 8, die gleichzeitig eine Lastbegrenzung 11 bildet. Im pyrotechnischen Stellzylinder 5 ist eine Kartusche 9 mit einer Antriebsladung 15 gezeigt. Der Schwenkhebel 6b ist länger als der Schwenkhebel 6a, so dass das Lastaufnahmeblech 3 im Bereich des Schienbeins 4a des Fahrers weiter zu ihm hin verschwenkt wird, als im Bereich des Knies 4. Dadurch wird das Lastaufnahmeblech 3 in eine optimale Position zum Abfangen der Vorwärtsbewegung des Fahrers z.B. bei einem Auffahrunfall gebracht, was zusammen mit der gebogenen Form des Lastaufnahmeblechs 3 ein optimales Aufnehmen und Abbremsen der Bewegungsenergie des Fahrers bei einem Unfall zur Folge hat.

Nun können bei einem Unfall die Knie 4 über das Lastaufnahmeblech 3 und mittels der bei Belastung verformenden Lastabsorptionselemente 2 über eine wesentlich längere Wegstrecke und damit auf ein niedrigeres Spitzenlastniveau verzögert werden. Dadurch wird der Raum unter der Lenksäule 1 in vorteilhafter Weise als energieaufzehrender Verformungsweg genutzt.

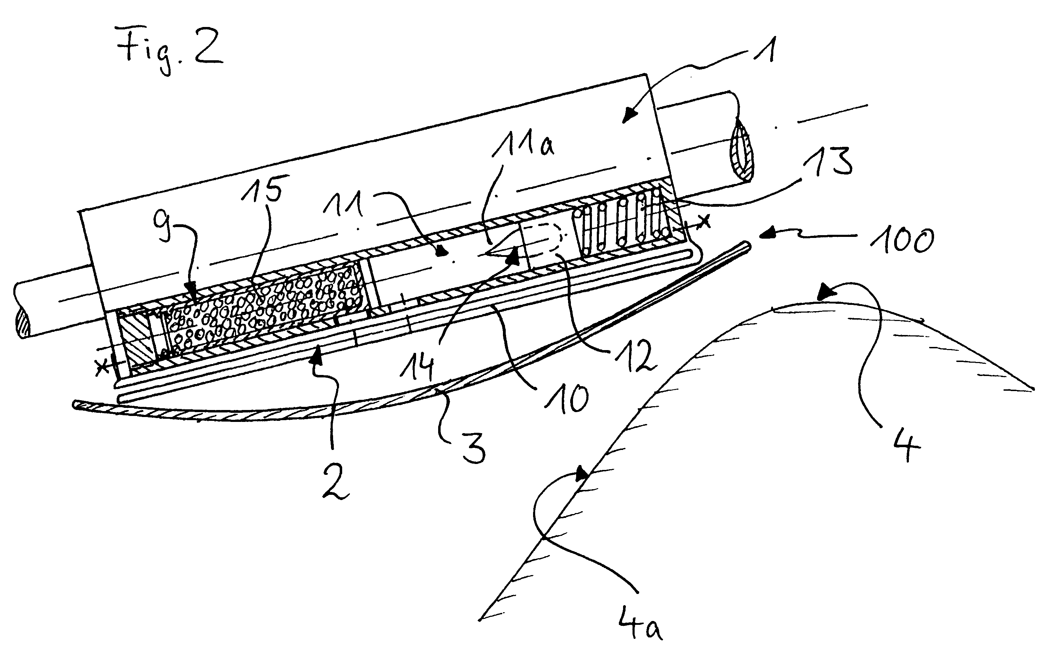

In der Fig. 2 ist die oben angegebene Alternative 2 der Sicherheitseinrichtung 100 mit ihren Komponenten verdeutlicht. Bei dieser Variante, von der ein Ausführungsbeispiel in der Fig. 2 in einer Seitenansicht gezeigt ist, ist zwischen einer Lenksäule 1 und eventuell einer daran befestigten Gegenplatte (nicht gezeigt) als Bewegungselement analog dem Stellzylinder 5 der ersten Alternative und gleichzeitig als Lastabsorptionselement 2 ein Airbag 10 angebracht, der beim Crash das Lastaufnahmeblech 3 in Richtung Knie 4 bewegt und Bewegungsenergie des Knies 4 aufnehmen kann. Weiterhin ist hier ein Lastbegrenzungsventil 11a vorhanden, das mit dem Inneren des Airbags 10 in Verbindung steht. Je nach aufgebrachter Last durch die Knie 4 bewegt sich ein Kolben 12 gegen eine Feder 13 und öffnet damit einen Gasaustritt 14. Dieses Lastbegrenzungsventil 11a ist damit eine von der Auftreffgeschwindigkeit und/oder -wucht der Knie 4 gesteuerte Lastbegrenzung 11. Für den Airbag 10 ist ferner eine Kartusche 9 mit einer Antriebsladung 15 vorgesehen.

Das Lastaufnahmeblech 3 hat vorzugsweise die in den Figuren der Zeichnung gezeigte Form, so dass ein auftreffendes Knie 4 einerseits aufgefangen wird und ggf. die Lastabsorption wirken kann, und andererseits unter Energieaufzehrung und schützend das Knie 4 abgeleitet wird.

Das Lastaufnahmeblech 3 ist in der Fig. 1 in einer Wirkposition A gezeigt und die Ruhelage B des Lastaufnahmeblechs 3 ist strichpunktiert eingezeichnet. In der Fig. 2 befindet sich das Lastaufnahmeblech 3 in der Ruhelage B. Durch Positionierung und Formgebung des Airbags 10 ist die Wirkposition des Lastaufnahmeblechs 3 bei der Ausführung der Fig. 2 bestimmbar.

### Bezugszeichenliste

- 1: Lenksäule
- 2: Lastabsorptionselemente
- 3: Blech
- 4: Knie
- 4a: Schienbein
- 5: pyrotechnischer Stellzylinder
- 6: Schwenkhebeleinrichtung
- 6a, 6b: Schwenkhebel
- 7: Lagerung
- 8: Rücklaufsperre
- 9: Kartusche
- 10: Airbag
- 11: Lastbegrenzung
- 11a: Lastbegrenzungsventil
- 12: Kolben
- 13: Feder
- 14: Gasaustritt
- 15: Antriebsladung
- 100: Sicherheitseinrichtung

## Patentansprüche

1. Sicherheitseinrichtung für ein Fahrzeug mit einer Lenkung, bezüglich der eine Lastabsorptionseinrichtung für einen Knieaufschlag eines Fahrers im Fall eines Unfalls angeordnet ist, welche Lastabsorptionseinrichtung für einen Knieaufschlag ein Lastaufnahmeblech (3) enthält, das im Fall eines Unfalls durch eine Schwenkhebeleinrichtung (6) zu den Knien (4) des Fahrers hin in eine oder in Richtung hin zu einer Wirkposition (A) verstellbar ist und so ausgestaltet ist, dass es die auftreffende Last der Knie (4) bei einem Unfall aufnimmt und verteilt,
**dadurch gekennzeichnet,**
**dass** die Lastabsorptionseinrichtung an der Lenkung (1) befestigt ist, und
**dass** die Schwenkhebeleinrichtung (6) mittels eines pyrotechnisch antreibbaren Stellzylinders (5) betätigbar ist.

2. Sicherheitseinrichtung nach Anspruch 1, **dadurch gekennzeichnet, dass** das Lastaufnahmeblech (3) in seiner Wirkposition (A) über wenigstens ein Lastabsorbtionselement (2) bezüglich der Lenkung (1) abgestützt ist.

3. Sicherheitseinrichtung nach Anspruch 1 oder 2, **dadurch gekennzeichnet, dass** das Lastaufnahmeblech (3) durch einen sich aufblasenden Airbag (10) im Fall eines Unfalls zu den Knien (4) des Fahrers hin in eine oder in Richtung hin zu einer Wirkposition (A) verstellbar ist, und dass der Airbag (10) ein Lastabsorbtionselement (2) bildet.

4. Sicherheitseinrichtung nach Anspruch 3, **dadurch gekennzeichnet, dass** das Lastaufnahmeblech (3) mit dem Airbag (10) im Fall eines Unfalls derart in Position zu den Knien (4) des Fahrers hin verstellbar ist, dass mehr Crashlastabsorptionsweg entsteht.

5. Sicherheitseinrichtung nach Anspruch 3 oder 4, **dadurch gekennzeichnet, dass** der Airbag (10) über eine Lastbegrenzung (11) verfügt.

6. Sicherheitseinrichtung nach Anspruch 5, **dadurch gekennzeichnet, dass** die Lastbegrenzung (11) durch ein Lastbegrenzungsventil (11a) gebildet ist, durch das belastungsabhängig Gas aus dem sich aufblasenden oder aufgeblasenen Airbag (10) ablaßbar ist.

7. Sicherheitseinrichtung nach einem der vorhergehenden Ansprüche, **dadurch gekennzeichnet, dass** das Lastaufnahmeblech (3) durch eine Schwenkhebeleinrichtung (6) im Fall eines Unfalls zu den Knien (4) des Fahrers hin in eine oder in Richtung hin zu einer Wirkposition (A) verschwenkbar ist.

8. Sicherheitseinrichtung nach Anspruch 7, **dadurch gekennzeichnet, dass** die Schwenkhebeleinrichtung (6) zwei oder vier oder mehr Schwenkhebel (6a) enthält.

9. Sicherheitseinrichtung nach einem der Ansprüche 7 bis 8, **dadurch gekennzeichnet, dass** wenigstens ein Lastabsorbtionselement (2) zusammen mit dem Lastaufnahmeblech (3) bezüglich der Lenkung (1) im Fall eines Unfalls derart in Position zu den Knien (4) des Fahrers hin zu einer Wirkposition (A) verschwenkbar ist, dass mehr Crashlastabsorptionsweg entsteht.

10. Sicherheitseinrichtung nach Anspruch 9, **dadurch gekennzeichnet, dass** eine Mehrzahl von Lastabsorbtionselementen (2) vorgesehen ist.

11. Sicherheitseinrichtung nach Anspruch 9 oder 10, **dadurch gekennzeichnet, dass** jedes Lastabsorbtionselement (2) über eine Lastbegrenzung (11) verfügt.

12. Sicherheitseinrichtung nach Anspruch 11, **dadurch gekennzeichnet, dass** die Lastbegrenzung (11) für jedes Lastabsorbtionselement (2) durch eine Rücklaufsperre (8) gebildet ist, die so ausgebildet ist, dass bei einer unfallbedingten Belastung durch die Knie (4) ein lastaufnehmender Widerstand entsteht.

13. Sicherheitseinrichtung nach einem der vorhergehenden Ansprüche, **dadurch gekennzeichnet, dass** die Lastabsorptionseinrichtung für einen Knieaufschlag des Fahrers an der Lenkung (1) angeordnet ist, und dass ggf. das Lastaufnahmeblech (3) in seiner zu den Knien (4) des Fahrers hin verstellten Position über das wenigstens eine Lastabsorbtionselement (2) an der Lenkung (1) abgestützt ist.

14. Sicherheitsverfahren für ein Fahrzeug mit einer Lenkung, bezüglich der ein Lastaufnahmeblech (3) einer Lastabsorptionseinrichtung für einen Knieaufschlag eines Fahrers im Fall eines Unfalls zu den Knien des Fahrers hin verstellt wird, so dass das Lastaufnahmeblech (3) die auftreffende Last der Knie (4) bei einem Unfall aufnimmt und verteilt,
**dadurch gekennzeichnet,**
**dass** das Lastaufnahmeblech (3) direkt gegen die Lenkung (1) abgestützt mittels eines pyrotechnisch antreibbaren Stellzylinders (5) im Fall eines Unfalls zu den Knien des Fahrers hin verstellt wird.

15. Sicherheitsverfahren nach Anspruch 14, **dadurch gekennzeichnet, dass** das verstellte Lastaufnahmeblech (3) über wenigstens ein Lastabsorbtionselement (2) bezüglich der Lenkung (1) abgestützt ist.

16. Sicherheitsverfahren nach Anspruch 14 oder 15, **dadurch gekennzeichnet, dass** das Lastaufnahmeblech (3) mittels eines sich aufblasenden Airbags (10) verstellt wird.

17. Sicherheitsverfahren nach Anspruch 14 oder 15, **dadurch gekennzeichnet, dass** das Lastaufnahmeblech (3) mittels einer Schwenkhebeleinrichtung (6) verstellt wird.

## Claims

1. A safety device for a vehicle with a steering system relative to which there is disposed a load absorption device for a driver's knee impact in the event of an accident, which load absorption device for a knee impact contains a load absorption plate (3) which, in the event of an accident, is movable, by means of a pivoting lever system (6), towards the driver's knees (4) into, or in the direction towards, an operative position (A) and is so devised that it absorbs and distributes the impacting load of the knee (4) in the event of an accident, **characterised in that** the load absorption device is fixed on the steering system (1) and **in that** the pivoting lever system (6) is adapted to be actuated by means of a pyrotechnically drivable adjusting cylinder (5).

2. A safety device according to claim 1, **characterised in that** in its operative position (A) the load absorption plate (3) is supported by means of at least one load absorption element (2) relatively to the steering system (1).

3. A safety device according to claim 1 or 2, **characterised in that** the load absorption plate (3) is movable, by an inflating airbag (10), in the event of an accident, towards the driver's knees (4) into, or in the direction towards, an operative position (A), and **in that** the airbag (10) forms a load absorption element (2).

4. A safety device according to claim 3, **characterised in that** the load absorption plate (3) is movable with the airbag (10) in the event of an accident, into position towards the driver's knees (4) in such manner that more crash load absorption path forms.

5. A safety device according to claim 3 or 4, **characterised in that** the airbag (10) has a load limiting means (11).

6. A safety device according to claim 5, **characterised in that** the load limiting means (11) is formed by a load limiting valve (11a) through which gas can be let off from the inflating or inflated airbag (10) in dependence on the load.

7. A safety device according to any one of the preceding claims, **characterised in that** the load absorption plate (3) is pivotable by a pivoting lever system (6) in the event of an accident towards the driver's knees (4) into, or in the direction towards, an operative position (A).

8. A safety device according to claim 7, **characterised in that** the pivoting lever system (6) contains two or four or more pivoting levers (6a).

9. A safety device according to claim 7 or 8, **characterised in that** at least one load absorption element (2) together with the load absorption plate (3) is pivotable relatively to the steering system (1) in the event of an accident into position towards the driver's knees (4) to an operative position (A) in such manner that more crash load absorption path forms.

10. A safety device according to claim 9, **characterised in that** a plurality of load absorption elements (2) is provided.

11. A safety device according to claim 9 or 10, **characterised in that** each load absorption element (2) has a load limiting means (11).

12. A safety device according to claim 11, **characterised in that** the load limiting means (11) for each load absorption element (2) is formed by a return movement lock (8) so constructed that in the event of an accident-caused load by the knee (4) a load-absorbing resistance forms.

13. A safety device according to any one of the preceding claims, **characterised in that** the load absorption device for a driver's knee impact is disposed on the steering system (1) and that if required the load absorption plate (3) is supported, by means of the at least one load absorption element (2), on the steering system (1) in its position in which it is moved towards the driver's knees (4).

14. A safety method for a vehicle with a steering system relatively to which a load absorption plate (3) of a load absorption device for a driver's knee impact is moved towards the driver's knees in the event of an accident so that the load absorption plate (3) absorbs and distributes the load of the knee (4) occurring in the event of an accident, **characterised in that** the load absorption plate (3) supported directly against the steering system (1) is moved towards the driver's knees by means of a pyrotechnically drivable adjusting cylinder (5) in the event of an accident.

15. A safety method according to claim 14, **characterised in that** the moved load absorption plate (3) is supported by means of at least one load absorption element (2) relatively to the steering system (1).

16. A safety method according to claim 14 or 15, **characterised in that** the load absorption plate (3) is moved by an inflating airbag (10).

17. A safety method according to claim 14 or 15, **characterised in that** the load absorption plate (3) is moved by means of a pivoting lever system (6).

## Revendications

1. Dispositif de sécurité pour un véhicule à système de direction, par rapport auquel est agencé un dispositif d'absorption de charge pour un impact des genoux d'un conducteur en cas d'accident, ledit dispositif d'absorption de charge pour un impact des genoux comprenant une tôle d'encaissement de charge (3) qui, en cas d'accident, est déplaçable par un dispositif à leviers pivotants (6) vers les genoux (4) du conducteur jusque dans une position d'action (A) ou en direction vers celle-ci et est réalisé de manière à encaisser et répartir la charge incidente des genoux (4) en cas d'accident,
**caractérisé en ce que** :
le dispositif d'absorption de charge est fixé sur le système de direction (1), et **en ce que** le dispositif à leviers pivotants (6) est actionnable au moyen d'un cylindre de réglage (5) à entraînement pyrotechnique.

2. Dispositif de sécurité selon la revendication 1, **caractérisé en ce que** dans sa position d'action (A) la tôle d'encaissement de charge (3) est soutenue par rapport au système de direction (1) via au moins un élément d'absorption de charge (2).

3. Dispositif de sécurité selon l'une ou l'autre des revendications 1 et 2, **caractérisé en ce que** la tôle d'encaissement de charge (3) est déplaçable par un airbag (10) se gonflant en cas d'accident vers les genoux (4) du conducteur jusque dans une position d'action (A) ou en direction vers celle-ci, et **en ce que** l'airbag (10) forme un élément d'absorption de charge (2).

4. Dispositif de sécurité selon la revendication 3, **caractérisé en ce que** la tôle d'encaissement de charge (3) est déplaçable avec l'airbag (10) en cas d'accident jusque dans une position vers les genoux (4) du conducteur de telle sorte qu'il résulte un plus grand chemin d'absorption de charge de collision.

5. Dispositif de sécurité selon l'une ou l'autre des revendications 3 et 4, **caractérisé en ce que** l'airbag (10) dispose d'une limitation de charge (11).

6. Dispositif de sécurité selon la revendication 5, **caractérisé en ce que** la limitation de charge (11) est formée par une valve de limitation de charge (11a) à travers laquelle du gaz peut s'échapper en fonction de la charge hors de l'airbag (10) qui se gonfle ou qui est gonflé.

7. Dispositif de sécurité selon l'une des revendications précédentes, **caractérisé en ce que** la tôle d'encaissement de charge (3) est mobile en pivotement par un dispositif à leviers pivotants (6) en cas d'accident vers les genoux (4) du conducteur jusque dans une position d'action (A) ou en direction vers celle-ci.

8. Dispositif de sécurité selon la revendication 7, **caractérisé en ce que** le dispositif à leviers pivotants (6) comprend deux ou quatre leviers pivotants (6a) ou plus.

9. Dispositif de sécurité selon l'une des revendications 7 et 8, **caractérisé en ce qu'**au moins un élément d'absorption de charge (2) est mobile en pivotement conjointement avec la tôle d'encaissement de charge (3) par rapport au système de direction (1) en cas d'accident jusque dans une position vers les genoux (4) du conducteur jusque dans une position d'action (A) de telle sorte qu'il résulte un plus grand chemin d'absorption de charge de collision.

10. Dispositif de sécurité selon la revendication 9, **caractérisé en ce qu'**il est prévu une pluralité d'éléments d'absorption de charge (2).

11. Dispositif de sécurité selon l'une ou l'autre des revendications 9 et 10, **caractérisé en ce que** chaque élément d'absorption de charge (2) dispose d'une limitation de charge (11).

12. Dispositif de sécurité selon la revendication 11, **caractérisé en ce que** la limitation de charge (11) pour chaque élément d'absorption de charge (2) est formé par un organe anti-retour (8) qui est réalisé de telle sorte qu'en cas de charge par les genoux (4) causée par un accident, il se produit une résistance qui encaisse la charge.

13. Dispositif de sécurité selon l'une des revendications précédentes, **caractérisé en ce que** le dispositif d'absorption de charge pour un impact des genoux du conducteur est agencé sur le système de direction (1), et **en ce que** la tôle d'encaissement de charge (3) est soutenue le cas échéant dans sa position déplacée vers les genoux (4) du conducteur par l'intermédiaire dudit au moins un élément d'absorption de charge (2) sur le système de direction (1).

14. Procédé de sécurité pour un véhicule à système de direction, par rapport auquel est déplacée une tôle d'encaissement de charge (3) d'un dispositif d'absorption de charge pour un impact des genoux d'un conducteur en cas d'accident, vers les genoux du conducteur, de sorte que la tôle d'encaissement de charge (3) encaisse et répartit la charge incidente des genoux (4) en cas d'accident,
**caractérisé en ce que** la tôle d'encaissement de charge (3), appuyée directement contre le système de direction (1), est déplacée vers les genoux du conducteur en cas d'accident au moyen d'un cylindre de réglage (5) à entraîneement pyrotechnique.

15. Procédé de sécurité selon la revendication 14, **caractérisé en ce que** la tôle d'encaissement de charge (3) déplacée est soutenue par rapport au système de direction (1) par l'intermédiaire d'au moins un élément d'absorption de charge (2).

16. Procédé de sécurité selon l'une ou l'autre des revendications 14 et 15, **caractérisé en ce que** la tôle d'encaissement de charge (3) est déplacée au moyen d'un airbag (10) qui se gonfle.

17. Procédé de sécurité selon l'une ou l'autre des revendications 14 et 15, **caractérisé en ce que** la tôle d'encaissement de charge (3) est déplacée au moyen d'un dispositif à leviers pivotants (6).
